(19) Europäisches Patentamt
European Patent Office
Office européen des brevets

(11) **EP 1 751 507 B1**

(12) **EUROPÄISCHE PATENTSCHRIFT**

(45) Veröffentlichungstag und Bekanntmachung des Hinweises auf die Patenterteilung:
**13.07.2016 Patentblatt 2016/28**

(51) Int Cl.:
***G01K 13/02*** *(2006.01)*   ***G01N 9/00*** *(2006.01)*
***G01F 1/84*** *(2006.01)*   ***G01F 23/296*** *(2006.01)*

(21) Anmeldenummer: **05752745.9**

(22) Anmeldetag: **23.05.2005**

(86) Internationale Anmeldenummer:
**PCT/EP2005/052355**

(87) Internationale Veröffentlichungsnummer:
**WO 2005/119634 (15.12.2005 Gazette 2005/50)**

(54) **VORRICHTUNG ZUR BESTIMMUNG UND/ODER ÜBERWACHUNG EINER PROZESSGRÖSSE EINES MEDIUMS**

DEVICE FOR DETERMINING AND/OR MONITORING A PROCESS VARIABLE OF A MEDIUM

PROCEDE POUR DETERMINER ET/OU SURVEILLER UNE VARIABLE DE PROCESSUS D'UN MILIEU

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **04.06.2004 DE 102004027397**

(43) Veröffentlichungstag der Anmeldung:
**14.02.2007 Patentblatt 2007/07**

(73) Patentinhaber: **Endress + Hauser GmbH + Co. KG**
**79689 Maulburg (DE)**

(72) Erfinder:
• **BRUTSCHIN, Wolfgang**
**79650 Schopfheim (DE)**

• **D'ANGELICO, Sascha**
**79588 Efringen-Kirchen (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**DE-A1- 10 023 305    US-A- 4 299 114**
**US-A- 5 777 550**

**Beschreibung**

Die Erfindung bezieht sich auf eine Vorrichtung zur Bestimmung und/oder Überwachung mindestens einer Prozessgröße eines Mediums. Bei der Prozessgröße handelt es sich beispielsweise um den Füllstand, die Dichte, die Viskosität oder den Durchfluss eines Mediums. Dabei kann es sich bei dem Medium um eine Flüssigkeit oder um ein Schüttgut handeln.

Von der Anmelderin werden unter den Bezeichnungen "Liquiphant" und "Soliphant" Füllstandsmessgeräte hergestellt und vertrieben. Der Füllstand wird dadurch bestimmt, dass eine Sensoreinheit eine mechanisch schwingfähige Einheit - z.B. eine Schwinggabel - aufweist, die über einen Piezowandler zu Schwingungen angeregt wird. Die Schwingungen - beispielsweise die Amplitude oder die Frequenz - hängen davon ab, ob die schwingfähige Einheit frei schwingt, oder ob sie von dem Medium bedeckt wird. Durch diese Abhängigkeit ist es möglich, beispielsweise den Füllstand zu bestimmen.
Der Piezowandler dient auch dem Empfangen der mechanischen Schwingungen, die somit in eine elektrische Wechselspannung umgewandelt werden. Diese Wechselspannung als Signal der schwingfähigen Einheit wird über entsprechende Verbindungen einer Rückkoppelelektronik zugeführt, wo das Signal verstärkt, gleichzeitig ausgewertet und der Sensoreinheit wieder rückgeführt wird. Aus der Frequenz, der Amplitude oder der Phase des von der Sensoreinheit kommenden Signals lässt sich dann z.B. auf den Füllstand des Mediums schließen. Es ist jedoch beispielsweise auch möglich, die Viskosität des Mediums zu bestimmen (siehe z.B. die PCT-Anmeldung WO 02/31471 A2).

Ein Problem liegt in der Verbindung zwischen der Sensoreinheit und der Rückkoppelelektronik. In der Vibronik - also bei den Verfahren, die eine mechanisch schwingfähige Einheit verwenden - wird im Allgemeinen zwischen den Zuständen "Sensor bedeckt" und "Sensor frei" unterschieden. Wird die Verbindung zwischen der Sensoreinheit und der Rückkoppelelektronik unterbrochen, so melden solche Grenzschalter - die Messgeräte dienen der Anzeige, ob ein Grenzstand erreicht worden ist - üblicherweise unabhängig davon, ob sie mit Medium in Berührung stehen oder nicht, bedeckt, wenn mindestens eine der elektrischen Verbindungen zwischen der Rückkoppelelektronik und der Sensoreinheit - also üblicherweise der Piezowandler - unterbrochen ist. Eine solche Unterbrechung ist z.B. dadurch möglich, dass Kabel oder Verbindungsstellen durch Vibrationen hart werden und brechen. Solche Unterbrechungen können auch aus Fertigungsfehlern oder -mängeln resultieren, wobei sich durch die Vibrationen beim Betrieb des Messgerätes Verbindungen lösen. Eine solche Unterbrechung sei für das folgende allgemein und plastisch als Kabelbruch bezeichnet.

Der Patentschrift DE 100 23 305 C2 lässt sich ein Verfahren entnehmen, mit welchem ein solcher Kabelbruch erkannt wird. Es wird dabei ausgenutzt, dass ein Piezowandler auch als Kondensator fungiert, also eine bestimmte Kapazität aufweist. Davon ausgehend wird während der Schwingungserregung die Kapazität oder eine dazu proportionale Größe zwischen den elektrischen Zuleitungen zum Piezowandler gemessen. Unterschreitet die Kapazität einen vorgegebenen Sollwert, so wird eine Störmeldung ausgegeben. Dieses Verfahren hat den Nachteil, dass eine zusätzliche Schaltung erforderlich ist, die einen zusätzlichen Messwert erzeugt, der ausgewertet werden muss. Neben Frequenz und/oder Amplitude der Schwingungen wird also auch die Kapazität ausgewertet. Dieser zusätzliche Messwert bringt überdies keine zusätzliche Information über das Medium mit sich.

Aus der US 4,299,114 ist ein Ultraschall-Grenzschalter mit einer U-förmigen Brücke bekannt geworden, an deren beiden gegenüberliegenden Endbereichen jeweils ein Sendekristall und ein Empfangskristall angeordnet sind. Im Messbetrieb werden Ultraschallmesssignale zwischen den beiden Kristallen übertragen, wobei die Dämpfung der Ultraschallmesssignale bei Vorhandensein von festem oder flüssigem Medium im Spalt größer ist, als bei Anwesenheit von Luft. Somit lässt sich erkennen, ob der vorgegebene Grenzstand erreicht ist oder nicht.
Neben dem Messbetrieb gibt es einen Testbetrieb. Der Testbetrieb wird eingeleitet, wenn der Spalt frei von Medium ist und dient dazu, die Integrität des Ultraschall-Grenzschalters zu überprüfen. Während im Messbetrieb der Dickenmode der Kristalle mit einer hohen Resonanzfrequenz angeregt wird, wird im Testbetrieb der Radialmode mit einer niedrigen Resonanzfrequenz angeregt. Die Übertragung der niederfrequenten Ultraschallmesssignale erfolgt im Testmode über die Brücke und nicht über den Spalt. Um die unterschiedlichen Resonanzfrequenzen detektieren zu können, wird der Bandpassfilter aktiv verändert.

In der US-A 5 777 550 wird ein Instrumentensystem beschrieben, das in einen Testzustand versetzt wird, um zu bestimmen, ob das Instrumentensystem korrekt auf den Testzustand reagiert. Das Instrumentensystem umfasst ein Ultraschall-Instrument mit einem Sensor. Im Testzustand wird ein Testsignal an einen Sendekristall des Sensors angelegt, wobei ein Empfangskristall die Reaktion des Sensors ermittelt. Falls der Sensor korrekt reagiert, wird das Testsignal über eine der Leitungen zum Sendekristall geführt. Der Sendekristall erzeugt einen mechanischen Puls, der an die Wandstruktur des Sensors übertragen wird. Die Deformation der Wandstruktur erzeugt ein Signal in dem Empfangskristall, das mittels einer zweiten Leitung übertagen wird. Empfängt der Detektor dieses Signal, wird ein Schalter geschlossen, um eine Rückwirkung zu erzielen. Im Fall eines Leitungsbruchs wird kein Empfangssignal erzeugt, und der Schalter wird nicht geschlossen. Da keine Rückwirkung erfolgt, ändert sich das Ausgangssignal nicht.

Die Aufgabe der Erfindung ist es, einen Kabelbruch zwischen der Sensoreinheit und der Rückkoppelelektronik mit einem möglichst geringen Aufwand zu erkennen und ihn sicher von den anderen Zuständen des Sensors unterscheidbar zu kennzeichnen.

Die Aufgabe wird gelöst durch eine Vorrichtung zur Bestimmung und/oder Überwachung mindestens einer Prozessgröße eines Mediums, nach Anspruch 1.

Eine Vorraussetzung ist, dass sich die Frequenzen: $\omega_{res}$, $\omega_1$, $\omega_{Kabelbruch}$ bzw. damit verbundene Frequenzbereiche ausreichend voneinander unterscheiden. Auf jeden Fall muss $\omega_{Kabelbruch}$ verschieden zu den Frequenzen bzw. Frequenzbereichen $\omega_{res}$ und $\omega_1$ sein.

Die Erfindung bezieht sich also auf alle Messsysteme, die mindestens eine Prozessgröße - z.B. den Füllstand - bestimmen, wobei eine Sensoreinheit direkt oder indirekt mit dem Medium in Kontakt tritt. Dabei ist es möglich, dass aus der Resonanzfrequenz (meist bei Flüssigkeiten) oder aus der Schwingungsamplitude (besonders bei Festkörpern) bei gleich bleibender Frequenz auf die Prozessgröße (sie z.B. die oben erwähnte Anmeldung WO 02/31471 A2) geschlossen wird. Somit kann es sich z.B. um eine oben beschriebene Schwinggabel handeln, es kann sich aber auch um Durchflussmessungen nach dem Coriolisprinzip handeln.

Die Idee der Erfindung besteht darin, dass eine Zusatzelektronik eingebracht wird, die dazu beiträgt, dass eine - im Fall, dass es beim normalen Betrieb der Vorrichtung bzw. des Messgerätes zwei unterschiedliche Frequenzen/Frequenzbereichen gibt - dritte Schwingfrequenz definiert wird, aus deren Auftreten darauf geschlossen werden kann, dass sich ein Kabelbruch ereignet hat, dass also die Sensoreinheit nicht mehr richtig mit der restlichen Elektronik des Messgerätes verbunden ist.

Bei der Schwinggabel ist es beispielsweise vorgesehen, dass im normalen Betrieb die Resonanzfrequenz $\omega_{res}$ innerhalb eines Frequenzbereiches liegt. Damit wird Rücksicht darauf genommen, dass fertigungstechnisch aufgrund von Abweichungen nicht alle Gabeln die gleiche mechanische Resonanzfrequenz aufweisen. Weiterhin umfasst dieser Frequenzbereich auch die Frequenzen, die sich durch den Frei- und Bedecktzustand ergeben. Überdies treten durch unterschiedliche Dichten und Viskositäten der Medien auch unterschiedliche Frequenzen auf.

Weiterhin gibt es eine sog. Abrissfrequenz $\omega_1$: Es ist möglich, dass beispielsweise durch das Medium - z.B. Feststoffe in einer Flüssigkeit - oder durch mechanische Beschädigung ein mechanisches Schwingen der Sensoreinheit nicht mehr möglich ist. Es kann also beispielsweise ein Gabelzinken abgebrochen sein oder ein Feststoff ist zwischen die Gabelzinken geklemmt. In diesem Fall gibt es im ersten Schwingkreis nur noch eine elektrische Rückkopplung; die schwingfähige Einheit beeinflusst durch ihre mechanischen Eigenschaften nicht mehr den Schwingkreis. Um diesen Fall zu kennzeichnen, springt das System auf die erwähnte und definierte Abrissfrequenz $\omega_1$. Somit sind für die Schwinggabel ein Frequenzband und eine einzelne Frequenz vorgegeben. Oder allgemein, der erste Schwingkreis kann auf unterschiedlichen Frequenzen schwingen, aus denen auf die Prozessgröße oder Prozessgrößen geschlossen wird, oder die für andere definierte Zustände - z.B. das Abreißen der Schwingungen - stehen.

Bei der Detektion von Festkörpern oder Schüttgut tritt üblicherweise nur eine Frequenz ($\omega_{res}$) innerhalb eines Frequenzbandes auf. Bei diesen Messgeräten ändert sich jedoch nicht die Frequenz durch den Kontakt mit dem Medium.

Das erfindungsgemäße Messgerät wird also als ein Schwingkreis aufgefasst, der im Wesentlichen aus drei Einheiten besteht: Rückkoppelelektronik, Sensoreinheit und Zusatzelektronik. Die Rückkoppelelektronik wird auch für die Bestimmung der Prozessgröße verwendet, indem z.B. über sie die Verstärkung, die Frequenz oder die Phase der detektierten Schwingungen bestimmt und ausgewertet werden kann. Sind alle Verbindungen in Ordnung, so treten beispielsweise die Schwingungen mit der Resonanzfrequenz $\omega_{res}$ im Bereich des vorgegebenen Frequenzbandes auf oder das System schwingt mit der Abrissfrequenz $\omega_1$ im Fall einer mechanischen Beeinträchtigung der Sensoreinheit. Die Frequenzen sind dabei abhängig von der Ausgestaltung der drei Einheiten.

Die Einheiten sind nun so miteinander geschaltet, dass bei einem Kabelbruch zwischen Rückkoppelelektronik und Sensoreinheit die Rückkoppelelektronik und die Zusatzelektronik einen zweiten Schwingkreis bilden. Dieser zweite Schwingkreis schwingt dann auf einer zusätzlichen Resonanzfrequenz $\omega_{Kabelbruch}$, die somit eindeutig den Kabelbruch kennzeichnet. Durch die Erfindung wird also quasi eine dritte Resonanzfrequenz (ist für den Normalfall nur eine Resonanzfrequenz $\omega_{res}$ vorgesehen, so handelt es sich durch die Zusatzelektronik um die zweite Resonanzfrequenz) bereitgestellt, deren Auftreten ein Zeichen für den Kabelbruch ist. Es gibt also eine Frequenz (Festkörper) oder ein Frequenzbereich (Flüssigkeiten), die sich aus dem normalen Betrieb ergeben. Dazu kommt eine Frequenz für den Zustand, dass keine mechanischen Schwingungen möglich sind. Und durch die Erfindung wird eine zusätzliche Frequenz bereitgestellt, die den Fall des Kabelbruches kennzeichnet.

Eine Ausgestaltung der erfindungsgemäßen Vorrichtung beinhaltet, dass die Sensoreinheit und die Zusatzelektronik parallel und in Reihe zur Rückkoppelelektronik geschaltet sind. Durch diese Ausgestaltung lässt es sich sehr einfach realisieren, dass ein erster und ein zweiter Schwingkreis gegeben sind, wobei sich der zweite Schwingkreis ergibt, wenn die Verbindung mit der Sensoreinheit abbricht.

Erfindungsgemäß ist die Verstärkung des ersten Schwingkreises im Bereich der Resonanzfrequenz bzw. Resonanzfrequenzen ($\omega_{res}$, $\omega_1$) des ersten Schwingkreises größer als im Bereich der Resonanzfrequenz ($\omega_{Kabelbruch}$) des zweiten Schwingkreises ist. Der Vorteil dieser Ausgestaltung ist, dass so verhindert wird, dass durch die Zusatzelektronik das Gesamtverhalten der Vorrichtung, also des Messgerätes negativ beeinflusst wird. Prinzipiell könnte der erste Schwingkreis auf jeder der drei Resonanzfrequenzen bzw. der Frequenzen und im Frequenzbereich schwingen. Im

**EP 1 751 507 B1**

konkreten Fall verbleibt die Auswahl zwischen einer der Resonanzfrequenzen für den normalen Betrieb ($\omega_{res}$) und der Frequenz des Kabelbruchs ($\omega_{Kabelbruch}$) und die Auswahl zwischen der Abrissfrequenz ($\omega_1$) und der Frequenz des Kabelbruchs ($\omega_{Kabelbruch}$). Die Auswahl zwischen der Frequenz $\omega_{res}$ und der Frequenz $\omega_1$ ist durch den mechanischen Zustand der Sensoreinheit bestimmt. Von daher bleiben von den drei möglichen Frequenzen nur die genannten Paarungen übrig. Da die (Kreis)Verstärkung des ersten Schwingkreises - die Verstärkung setzt sich aus den Verstärkungen der drei Einheiten zusammen - jedoch auf den eigentlich interessierenden Frequenzen ($\omega_{res}$, $\omega_1$) des ersten Schwingkreises größer, vorzugsweise deutlich oder viel größer als auf der Resonanzfrequenz ($\omega_{Kabelbruch}$) des zweiten Schwingkreises ist, kann diese Resonanzfrequenz ($\omega_{Kabelbruch}$) im normalen Betrieb kaum auftreten. Somit ist also eine Bedingung an die praktische Umsetzung, dass diese Resonanzfrequenz im normalen Betrieb möglichst nicht auftreten darf.

Eine dazu alternative oder in Kombination damit bestehende Ausgestaltung sieht vor, dass die Summe der Phasen, die im ersten Schwingkreis entstehen, im Wesentlichen ein ganzzahliges Vielfaches von 2p ist, und dass die Summe der Phasen, die im zweiten Schwingkreis entstehen, verschieden von einem ganzzahligen Vielfachen von 2p ist, wobei die Abweichung von einem ganzzahligen Vielfachen von 2p derartig ist, dass der zweite Schwingkreis schwingfähig ist. Ist also die Sensoreinheit mit der Rückkoppelelektronik und der Zusatzelektronik verbunden, so ist für den ersten Schwingkreis die Summe über die einzelnen Phasen ein ganzzahliges Vielfaches von 360° bzw. 2p. Anders ausgedrückt: An jedem Punkt, an dem man den ersten Schwingkreis auftrennt, ist das ankommende Signal mit dem abgehenden Signal in Phase, d.h. der erste Schwingkreis kann optimal schwingen. Für den zweiten Schwingkreis aus Rückkoppelelektronik und Zusatzelektronik ist jedoch die Summe der Phasen vorzugsweise leicht verschieden zu einem ganzzahligen Vielfachen von 360°, so dass eine Schwingung des ersten Schwingkreises auf der Resonanzfrequenz des zweiten Schwingkreises kaum wahrscheinlich ist, aber eine Schwingung des zweiten Schwingkreises dennoch möglich ist. Dies ist also eine alternative Bedingung, um eine Beeinträchtigung des Messgerätes durch die Zusatzelektronik zu vermeiden. Möglichkeiten sind die Einstellung der Verstärkung oder der Phasen oder eine passende Kombination aus beiden Möglichkeiten.

Eine Ausgestaltung sieht vor, dass durch eine Kombination aus der Verstärkung des ersten oder des zweiten Schwingkreises und aus der Summe der Phasen des ersten oder des zweiten Schwingkreises sichergestellt ist, dass ein Schwingen des ersten Schwingkreises auf der Resonanzfrequenz ($W_{Kabelbruch}$) des zweiten Schwingkreises vermieden ist. Mit dieser Ausgestaltung werden also die Phasen und die Verstärkungen miteinander kombiniert, so dass eine Schwingung des ersten Schwingkreises auf der Resonanzfrequenz ($\omega_{Kabelbruch}$) des zweiten Schwingkreises vermieden wird. Die beiden obigen Ausgestaltungen werden also zusammengeführt, um sicherzustellen, dass der erste Schwingkreis nicht auf der Resonanzfrequenz des zweiten Schwingkreises schwingt. Dabei sind beliebige Kombinationen der Verstärkungs- oder Phasenbedingungen möglich.

Eine Ausgestaltung beinhaltet, dass die Sensoreinheit mindestens eine mechanisch schwingfähige Einheit aufweist. Es handelt sich also beispielsweise um ein Messgerät mit einer Schwinggabel oder um einen sog. Einstab. Bei solchen schwingfähigen Einheiten - Schwinggabel oder Einstab - ist üblicherweise auch eine Anregungs-/Empfangseinheit vorgesehen, die die mechanischen Schwingungen der schwingfähigen Einheit erzeugt und die die Schwingungen empfängt. Eine Ausgestaltung davon ist ein Piezowandler, der mit einer elektrischen Wechselspannung angesteuert wird, diese in eine mechanische Schwingung der schwingfähigen Einheit umsetzt und der umkehrt die mechanischen Schwingungen in eine Wechselspannung übersetzt. Es kann sich jedoch auch um das schwingende Rohr oder die schwingenden Rohre eines Coriolis-Durchflussmessgerätes handeln. Bei einem Einstab oder ein Schwinggabel ist die Prozessgröße vorzugsweise der Füllstand des Mediums, es kann sich jedoch auch um die Viskosität oder die Dichte des Mediums handeln.

Die Erfindung wird anhand der nachfolgenden Zeichnungen näher erläutert. Es zeigt:

Fig. 1: ein schematisches Blockschaltbild der erfindungsgemäßen Vorrichtung,

Fign. 2a bis 2c: Diagramme zur Beschreibung des Verhaltens der erfindungsgemäßen Vorrichtung, und

Fig. 3: eine schematische Darstellung einer Schwinggabel als erfindungsgemäßer Vorrichtung.

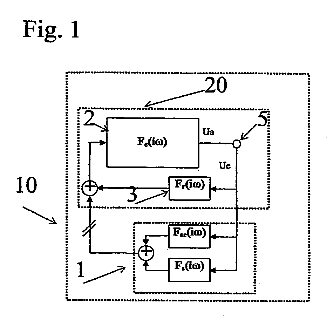

In der Fig. 1 ist die erfindungsgemäße Vorrichtung schematisch dargestellt. Zu sehen ist die Sensoreinheit 1, die Rückkoppelelektronik 2 und die erfindungsgemäß hinzugefügte Zusatzelektronik 3. Diese drei Einheiten 1, 2, 3 bilden zusammen den ersten Schwingkreis 10, der in Abhängigkeit vom Prozessmedium, welches in Wechselwirkung mit der Sensoreinheit 1 tritt, auf einer der beiden Resonanzfrequenzen $\omega_{res}$ (diese Frequenz befindet sich innerhalb eines Frequenzbandes) oder $w_1$ (im Fall, dass die Schwingungen abreißen, weil das mechanische Schwingen der Sensoreinheit nicht mehr möglich ist) schwingt. Die Sensoreinheit 1 und die Zusatzelektronik 3 sind in dieser Ausgestaltung parallel und in Reihe zur Rückkoppelelektronik 2 geschaltet, so dass die Rückkoppelelektronik 2 und die Zusatzelektronik 3 im Falle eines Kabelbruchs (in der Abbildung angedeutet durch die beiden Unterbrechungsstriche) den zweiten Schwingkreis 20 mit der Resonanzfrequenz $w_{Kabelbruch}$ bilden.

Für die folgende Betrachtung sind die mit F(i$\omega$) bezeichneten Teile die Rückkoppelglieder mit der komplexen Übertragungsfunktion

$$F(i\omega) = U_{aus} \Big/ U_{ein}$$

:

Fe: Übertragungsfunktion der Rückkoppel- oder Verstärkerelektronik 2,

Fr: die Zusatzelektronik 3 zur Generierung des Kabelbruchzustandes,

Fse: die Übertragungsfunktion der rein elektrischen Sensoreigenschaften (Sensor im vollständig blockiertem Zustand; eine mechanische Schwingung ist nicht mehr möglich) der Sensoreinheit 1,

Fs: die Übertragungsfunktion der durch die mechanische Resonanzschwingung der schwingfähigen Einheit der Sensoreinheit bestimmten elektrischen Signale (Sensor schwingt; er ist im Frei- oder im Bedeckt-Zustand oder die mechanisch schwingfähige Einheit ist teilweise bedeckt, d.h. der Sensor befindet sich in einem Zwischenzustand).

Um die Schwingkreise 10, 20 zu beschreiben, werden sie am Ausgang 5 der Rückkoppelelektronik 2 aufgetrennt. Eine mögliche Signalsättigung wird zur Vereinfachung nicht berücksichtigt (nur stationärer Fall).

Die Schwingbedingung der verschiedenen Zustände lauten dann:

Zustand 1:

Der Sensor kann frei oder teilweise oder vollständig bedeckt schwingen und kein Kabelbruch ist gegeben:

$$\frac{U_a(i\omega)}{U_e(i\omega)} = \left[F_r(i\omega) + F_{se}(i\omega) + F_s(i\omega)\right] \times F_e(i\omega) = 1 + 0i \quad \Big|\omega = \omega_{res}$$

Zustand 2:

Der Sensor schwingt nicht, d.h. es ist keine mechanische Schwingung möglich, und kein Kabelbruch ist gegeben:

$$\frac{U_a(i\omega)}{U_e(i\omega)} = \left[F_r(i\omega) + F_{se}(i\omega) + 0\right] \times F_e(i\omega) = 1 + 0i \quad \Big|\omega = \omega_1$$

Zustand 3:

Ein Kabelbruch ist aufgetreten, wobei der Sensor schwingfähig oder nicht schwingfähig ist:

$$\frac{U_a(i\omega)}{U_e(i\omega)} = F_r(i\omega) \times Fe(i\omega) = 1 + 0i \quad \Big|\omega = \omega_{Kabelbruch}$$

Dabei sind die Resonanzfrequenzen:

$$\omega_{res}$$

: Resonanzfrequenz des ersten Schwingkreises 10 mit der mechanischen Schwingung des Sensors, wobei die Gabel schwingt (entweder frei oder bedeckt oder zwischen diesen beiden Extremwerten).

$$\omega_1$$

: Resonanzfrequenz des ersten Schwingkreises 10 mit der vollständig bedeckten Gabel, die mechanisch nicht mehr schwingen kann (Abrissfrequenz). Die Übertragungsfunktion Fs des schwingenden Sensors ist 0.

$$\omega_{Kabelbruch}$$

: Resonanzfrequenz des zweiten Schwingkreises 20, der Kabelbruch signalisiert. Die Übertragungsfunktionen Fs und Fse sind jeweils aufgrund des Kabelbruches weggefallen.

Um Zustand 2 und Zustand 3 unterscheiden zu können, muss

$$\omega_1 \neq \omega_{Kabelbruch}$$

sein. Dies ist also die erste Bedingung, um die erfindungsgemäße Vorrichtung zu realisieren. Gleiches gilt für die Resonanzfrequenz des ersten Schwingkreises 10 mit der mechanischen Schwingung des Sensors

$$\omega_{res}$$

Des weiteren muss sichergestellt sein, dass die Schwingung bei freiem Sensor kaum von dem zusätzlichen Übertragungsglied Fr beeinflusst wird, indem z.B. bei gegebenem Fs die Transferfunktion Fr so gewählt wird, dass gilt: <

$$\left| F_r(i\omega_{Kabelbruch}) \times F_e(i\omega_{Kabelbruch}) \right| \left\| \left[ F_r(i\omega_{res}) + F_{se}(i\omega_{res}) + F_s(i\omega_{res}) \right] \times F_e(i\omega_{res}) \right|$$

Das bedeutet, dass die Kreisverstärkung des ersten Schwingkreises 10 im Bereich $\omega = \omega_{Kabelbruch}$ deutlich kleiner als im Bereich $\omega = \omega_{res}$ bzw. $\omega = \omega_1$ sein muss. Dies ist eine zweite Bedingung für die technische Umsetzung der Vorrichtung. Dies lässt sich wie oben bereits ausgeführt auch über die Phasen realisieren.

Im Allgemeinen ist

$$\omega_{res}$$

ein von den mechanischen Schwingeigenschaften des Sensors bestimmtes Frequenzintervall (fertigungstechnische Toleranzen; Dichte und Dämpfungseigenschaften des Mediums, in das der Sensor eingetaucht ist; Temperatur; Druck).

Anmerkung: In einer realen Elektronik wird aus Gründen des Aufwands die Verstärkung meistens nicht gleich 1, sondern größer 1 gesetzt. Für eine Vereinfachung der Formeln wurde die Kreisverstärkung gleich 1 gesetzt. Die obige Ausführung dürfte jedoch das Prinzip der Erfindung und die Bedingungen zur deren Realisierung ausreichend beschrieben haben.

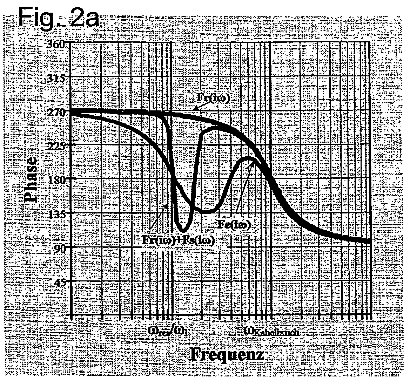

In den Figuren Fig. 2a bis 2c wird die Kabelbruchdetektion durch die erfindungsgemäße Vorrichtung näher erläutert. Für das Verständnis wird die Situation derart vereinfacht, dass der erste Schwingkreis nur auf einer Resonanzfrequenz $\omega_{res/1}$ schwingt, d.h. die oben beschriebenen beiden Zustände 1 und 2, die sich beide auf eine "funktionierende" Verbindung zwischen der Sensoreinheit und der Rückkoppelelektronik beziehen, werden zusammengefasst. Hiermit wird also auch der Fall erfasst, dass im normalen Betrieb nur eine Resonanzfrequenz auftritt, weil z.B. der Kontakt mit dem Medium nicht zu einer Veränderung der Schwingungsfrequenz, sondern zu einer Änderung der Schwingungsamplitude führt (z.B. Schüttgüter oder Feststoffe im Gegensatz zu Flüssigkeiten, deren unterschiedliche Dichten und Viskositäten zu dem Frequenzbereich führen).

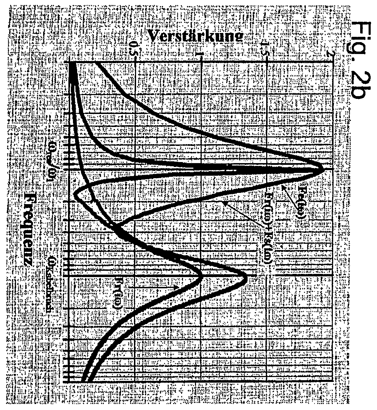

In den Figuren Fig. 2a und 2b beschreibt die Kurve Fe(iω) jeweils den Phasen- bzw. Verstärkungsverlauf der Rückkoppelelektronik 2. Die Kurve Fr(iω)+Fs(iω) beschreibt die Rückkopplung des ersten Schwingkreises 10 und die Kurve Fr(iω) die Zusatzelektronik 3. Die Transferfunktion Fse(iω), also das Verhalten im Fall der bedeckten Schwinggabel wird zur Vereinfachung weggelassen. Die Spektren in den Fign. 2a und 2b erfüllen die Schwingbedingungen für zwei unterschiedliche Frequenzen $\omega_{res/1}$ und $\omega_{Kabelbruch}$.

Zustand 1/2:

Die Sensoreinheit meldet frei oder bedeckt. Es liegt kein Kabelbruch vor. Es gelten die Kurven Fe(iω) und Fr(iω)+Fs(iω))

$$\left[F_r(i\omega) + F_s(i\omega)\right] \times F_e(i\omega) \geq 1 + 0i$$

Diese Gleichung ist für beide Frequenzen $\omega_{res/1}$ und $w_{Kabelbruch}$ erfüllt.

Da aber für diesen Zustand auch

$$\left|F_r(i\omega_{Kabelbruch}) \times F_e(i\omega_{Kabelbruch})\right| \left|\left[F_r(i\omega_{res/1}) + F_s(i\omega_{res/1})\right] \times F_e(i\omega_{res/1})\right|$$

erfüllt sein muss, schwingt der erste Schwingkreis 10 bei der Frequenz $\omega = \omega_{res/1}$. Aus der Abbildung der Spektren ist das nachvollziehbar. Durch die Zusatzelektronik 3 der erfindungsgemäßen Vorrichtung wird also das normale Verhalten der Messvorrichtung nicht beeinflusst.

Zustand 3:

Die Sensoreinheit ist nicht angeschlossen; es liegt also ein Kabelbruch vor. Es gelten die Kurven Fe(i$\omega$) und Fr(i$\omega$)).

Jetzt ist für $\omega = \omega_{Kabelbruch}$ folgende Beziehung erfüllt:

$$F_r(i\omega) \times Fe(i\omega) = 1 + 0i \quad \left|\omega = \omega_{Kabelbruch}\right.$$

Im Fall des Kabelbruches schwingt der zweite Schwingkreis 20 also auf der Kabelbruch-Frequenz $\omega_{Kabelbruch}$, so dass aus dem Auftreten dieser Frequenz darauf geschlossen werden kann, dass ein solcher Kabelbruch vorliegt. Und besonders durch das Verstärkungsprofil der Rückkoppelelektronik 2 wird sichergestellt, dass im normalen Betrieb, also bei einer bestehenden Verbindung zwischen den einzelnen Einheiten, der erste Schwingkreis 10 sicher auf den Resonanzfrequenzen schwingt, die zur Bestimmung der Prozessgröße dienen.

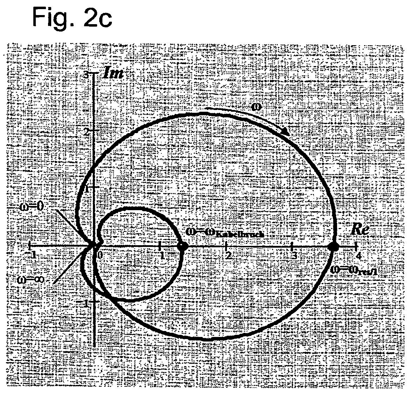

Diese Zustände werden auch in der Ortskurve in Fig. 2c ersichtlich:

In der Ortskurve ist die Funktion

$$F(i\omega) = \left[F_r(i\omega) + F_s(i\omega)\right] \times F_e(i\omega)$$

des offenen Schwingkreises dargestellt. Mit $\omega$ als Parameter kann man auf der Funktion in Pfeilrichtung vom Ursprung ($\omega=0$), über den ersten Oszillationspunkt ($\omega=\omega_{res/1}$) und den zweiten ($\omega=\omega_{Kabelbruch}$) wieder bis in den Ursprung ($\omega=\infty$) entlangfahren. In den beiden Schwingungspunkten ist F real, d.h. es existiert keine Phasenverschiebung bis auf n*360°, wobei n eine natürliche Zahl ist (n = 1, 2, 3,...) zwischen Ein- und Ausgang.

Durch die obigen Bedingungen sind die Sensoreinheit 1, die Rückkoppelelektronik 2 und die Zusatzelektronik 3 hinreichend beschrieben, so dass ihre Realisation einer fachlich qualifizierten Person keine sonderlichen Aufgaben mehr stellen. Es muss prinzipiell darauf geachtet werden, dass die Resonanzfrequenz des zweiten Schwingkreises 20 hinreichend verschieden von der oder den Resonanzfrequenzen des ersten Schwingkreises 10 ist, und dass durch die Zusatzelektronik 3 kein negativer Einfluss auf die Schwingungen des ersten Schwingkreises 10 auftritt. Dies lässt sich beispielsweise dadurch realisieren, dass das Verstärkungsverhalten des ersten Schwingkreises 10 im Bereich der Schwingungen des ersten Schwingkreises 10 mit den Frequenzen $\omega_{res}$ bzw. $\omega_1$ deutlich größer ist als im Bereich der Schwingungen des zweiten Schwingkreises 20 mit $\omega_{Kabelbruch}$.

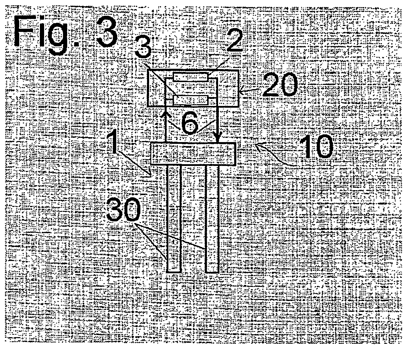

Fig. 3 zeigt eine Schwinggabel als mechanisch schwingfähige Einheit 30 einer erfindungsgemäßen Vorrichtung. Eine solche Einheit 30 wird beispielsweise mit einem Piezowandler - hier nicht dargestellt - zu Schwingungen angeregt. Wird die Vorrichtung zur Füllstandsbestimmung verwendet, so schwingt die Gabel 30 auf zwei unterschiedlichen Frequenzen $w_{res}$ (dies ist ein Frequenzbereich, der durch die mechanischen Eigenschaften der Gabel und durch die Eigenschaften des Mediums, z.B. Füllstand, Dichte oder Viskosität bestimmt ist) oder $w_1$ (die Gabel kann keine mechanischen Schwingungen ausführen; Abrissfrequenz für Abriss der mechanischen Schwingungen). Problematisch sind die Verbindungen 6 zwischen der Sensoreinheit 1 und der Rückkoppelelektronik 2 bzw. der Zusatzelektronik 3. Diese Verbindungen 6 sind hier durch eine Anregungs- und Empfangsverbindung dargestellt, es kann sich jedoch auch um eine einzige bidirektionale Verbindung handeln. Solche Verbindungen 6 können aus Kabel bestehen, deren Lötstellen abbrechen, oder die durch ein aggressives Medium, das in die Vorrichtung eingedrungen ist, angegriffen werden. Es bestehen also viele Möglichkeiten, durch die es zu einem "Kabelbruch" kommen kann. Dieser Zustand "Kabelbruch" wird durch die Erfindung eindeutig erkennbar, indem durch die Zusatzelektronik 3 ein zweiter Schwingkreis 20 gebildet wird, der auf einer eindeutig definierten Resonanzfrequenz $W_{Kabelbruch}$ schwingt. Und durch die Ausgestaltung des ersten Schwingkreises 10, bzw. spezieller durch die Ausgestaltung der Verstärkungscharakteristik der Sensoreinheit 1, der Rückkoppelelektronik 2 und der Zusatzelektronik 3 wird auch sichergestellt, dass das der erste Schwingkreis 10 nicht auf dieser Kabelbruchfrequenz schwingt. Somit wird der zweite Schwingkreis 20 nur dann aktiv, wenn die Verbindung 6 zwischen Zusatzelektronik 3 und dem zweiten Schwingkreis 20 ausgefallen ist, wenn also ein Kabelbruch aufgetreten ist. Somit hat die Zusatzelektronik 3 den Vorteil, dass durch sie eine wohldefinierte Frequenz im Falle des Kabelbruchs auftritt, dass aber durch sie auch keine negative Beeinträchtigung des Normalbetriebs erfolgt.

**Patentansprüche**

1.  Vorrichtung *zur* Bestimmung und/oder Überwachung zumindest einer der Prozessgrößen: Füllstand, Dichte, Viskosität oder Durchfluss eines Mediums, mit einer Sensoreinheit (1), die eine mechanisch schwingfähige Einheit aufweist, mit einer Anregungs-/Empfangseinheit zum Erzeugen und Empfangen von mechanischen Schwingungen der schwingfähigen Einheit, mit einer Rückkoppelelektronik (2) und mit einer Zusatzelektronik (3),
    wobei die Sensoreinheit (1), die Rückkoppelelektronik (2) und die Zusatzelektronik (3) einen ersten Schwingkreis (10) bilden, wobei im normalen Betrieb der erste Schwingkreis (10) mit mindestens einer Resonanzfrequenz ($\omega_{res}$) innerhalb mindestens eines Resonanzfrequenzbereichs schwingt, wobei die zumindest eine Resonanzfrequenz ($\omega_{res}$) zur Bestimmung der zumindest einen Prozessgröße dient,
    wobei im Fall einer mechanischen Beeinträchtigung der Sensoreinheit (1) der erste Schwingkreis (10) mit einer Abrissfrequenz ($\omega_1$) schwingt, die von der Resonanzfrequenz ($\omega_{res}$) verschieden ist, und
    wobei bei einem Kabelbruch zwischen der Rückkoppelelektronik (2) und der Sensoreinheit (1) die Rückkoppelelektronik (2) und die Zusatzelektronik (3) einen zweiten Schwingkreis (20) bilden, wobei der zweite Schwingkreis (20) auf einer Resananzfrequenz ($\omega_{Kabelbruch}$) schwingt, die sich von der zumindest einen Resonanzfrequenz ($\omega_{res}$) und der Abrissfrequenz ($\omega_1$) des ersten Schwingkreises (10) unterscheidet.

2.  Vorrichtung nach Anspruch 1,
    wobei die Sensoreinheit (1) und die Zusatzelektronik (3) parallel und in Reihe zur Rückkoppelelektronik (2) geschaltet sind.

3.  Vorrichtung nach Anspruch 1,
    wobei die Verstärkung des ersten Schwingkreises (10) im Bereich der Resonanzfrequenz/Resonanzfrequenzen ($\omega_{res}$) oder der Abrissfrequenz ($\omega_1$) des ersten Schwingkreises (10) größer als im Bereich der Resonanzfrequenz ($\omega_{Kabelbruch}$) des zweiten Schwingkreises (20) ist.

4.  Vorrichtung nach Anspruch 1 oder 3,
    wobei die Summe der Phasen, die im ersten Schwingkreis (10) entstehen, im Wesentlichen ein ganzzahliges Vielfaches von 2n ist,
    und
    wobei die Summe der Phasen, die im zweiten Schwingkreis (20) entstehen, verschieden von einem ganzzahligen Vielfachen von $2\pi$ ist, wobei die Abweichung von einem ganzzahligen Vielfachen von $2\pi$ derartig ist, dass der zweite Schwingkreis (20) schwingfähig ist.

5.  Vorrichtung nach Anspruch 3 und 4,
    wobei durch eine Kombination aus der Verstärkung des ersten (10) oder des zweiten Schwingkreises (20) und aus der Summe der Phasen des ersten (10) oder des zweiten Schwingkreises (20) sichergestellt ist, dass ein Schwingen des ersten Schwingkreises (10) auf der Resonanzfrequenz ($\omega_{Kabelbruch}$) des zweiten Schwingkreises (20) vermieden ist.

**EP 1 751 507 B1**

**Claims**

1. Apparatus for determining and/or monitoring at least one of the following process variables: level, density, viscosity or flow of a medium,

   with a sensor unit (1), which has a unit capable of mechanical oscillation, with an excitation/reception unit for generating and receiving mechanical oscillations of the unit capable of oscillation, with feedback electronics (2) and with additional electronics (3),

   wherein the sensor unit (1), the feedback electronics (2) and the additional electronics (3) form a first oscillation circuit (10),

   wherein, during normal operation, the first oscillation circuit (10) oscillates at at least a resonance frequency ($\omega_{res}$) within at least a resonance frequency range, wherein the at least one resonance frequency ($\omega_{res}$) is used to determine the at least one process variable,

   wherein, in the event of a mechanical impairment of the sensor unit (1), the first oscillation circuit (10) oscillates at a rupture frequency ($\omega_1$) that is different from the resonance frequency ($\omega_{res}$), and

   wherein the feedback electronics (2) and the additional electronics (3) form a second oscillation circuit (20) in the event of a cable open circuit between the feedback electronics (2) and the sensor unit (1), wherein the second oscillation circuit (20) oscillates at a resonance frequency ($\omega_{cable}$ open circuit) which is different from the at least one resonance frequency ($\omega_{res}$) and the rupture frequency ($\omega_1$) of the first oscillation circuit (10).

2. Apparatus as claimed in Claim 1,
   wherein the sensor unit (1) and the additional electronics (3) are switched in parallel and in series in relation to the feedback electronics (2).

3. Apparatus as claimed in Claim 1,
   wherein the amplification of the first oscillation circuit (10) in the range of the resonance frequency/resonance frequencies ($\omega_{res}$) or of the rupture frequency ($\omega_1$) of the first oscillating circuit (10) is greater than in the range of the resonance frequency ($\omega_{cable}$ open circuit) of the second oscillating circuit (20).

4. Apparatus as claimed in Claim 1 or 3,
   wherein the sum of the phases, which are generated in the first oscillation circuit (10), is essentially equal to a whole multiple of $2\pi$,
   and
   wherein the sum of the phases, which are generated in the second oscillation circuit (10), is different to a whole multiple of $2\pi$, wherein the difference in relation to a whole multiple of $2\pi$ is such that the second oscillation circuit (20) is capable of oscillation.

5. Apparatus as claimed in Claim 3 and 4,
   wherein a combination of the amplification of the first (10) or of the second oscillation circuit (20) and the sum of the phases of the first (10) or the second oscillation circuit (20) ensures that an oscillation of the first oscillation circuit (10) at the resonance frequency ($\omega_{cable}$ open circuit) of the second oscillation circuit (20) is prevented.

**Revendications**

1. Dispositif destiné à la détermination et/ou à la surveillance d'au moins une grandeur process : niveau, densité, viscosité ou débit d'un produit,

   avec une unité de capteur (1), qui présente une unité mécanique apte à vibrer, avec une unité d'excitation / de réception destinée à la génération et à la réception des vibrations mécaniques de l'unité apte à vibrer, avec un module électronique de rétroaction (2) et avec un module électronique additionnel (3), pour lequel l'unité de capteur (1), le module électronique de rétroaction (2) et le module électronique additionnel (3) constituent un premier circuit oscillant (10), pour lequel le premier circuit oscillant (10) oscille, en fonctionnement normal, à au moins une fréquence de résonance ($\omega_{res}$) au sein d'au moins une gamme de fréquences de résonance, pour lequel l'au moins une fréquence de résonance ($\omega_{res}$) sert à la détermination d'au moins une grandeur process,

   pour lequel, en cas d'influence mécanique de l'unité de capteur (1), le premier circuit oscillant (10) oscille à une fréquence de rupture ($\omega_1$) qui diffère de la fréquence de résonance ($\omega_{res}$), et

   pour lequel, en cas de rupture de câble entre le module électronique de rétroaction (2) et l'unité de capteur (1), le module électronique de rétroaction (2) et le module électronique additionnel (3) constituent un deuxième circuit oscillant (20), pour lequel le deuxième circuit oscillant (20) oscille à une fréquence de résonance ($\omega_{rupture\ de\ câble}$)

qui diffère de l'au moins une fréquence de résonance ($\omega_{res}$) et de la fréquence de rupture ($\omega_1$) du premier circuit oscillant (10).

2. Dispositif selon la revendication 1,
pour lequel l'unité de capteur (1) et le module électronique additionnel (3) sont couplés en parallèle et en série par rapport au module électronique de rétroaction (2).

3. Dispositif selon la revendication 1,
pour lequel l'amplification du premier circuit oscillant (10) dans la zone de la fréquence de résonance / des fréquences de résonance ($\omega_{res}$) ou de la fréquence de rupture ($\omega_1$) du premier circuit oscillant (10) est supérieure à l'amplification dans la zone de la fréquence de résonance ($\omega_{rupture\ de\ câble}$) du deuxième circuit oscillant (20).

4. Dispositif selon la revendication 1 ou 3,
pour lequel la somme des phases, qui sont générées dans le premier circuit oscillant (10), est pour l'essentiel égale à un multiple entier de $2\pi$,
et
pour lequel la somme des phases, qui sont générées dans le deuxième circuit oscillant (10), est pour l'essentiel différente d'un multiple entier de $2\pi$, la différence par rapport à un multiple entier de $2\pi$ étant telle que le deuxième circuit oscillant (20) est apte à vibrer.

5. Dispositif selon la revendication 3 et 4,
pour lequel la combinaison entre l'amplification du premier (10) ou du deuxième circuit oscillant (20) et la somme des phases du premier (10) ou du deuxième circuit oscillant (20) permet d'empêcher à coup sûr une oscillation du premier circuit oscillant (10) à la fréquence de résonance ($\omega_{rupture\ de\ câble}$) du deuxième circuit oscillant (20).

Fig. 1

Fig. 2a

## Fig. 2b

## Fig. 2c

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0231471 A2
- DE 10023305 C2
- US 4299114 A
- US 5777550 A